# EUROPÄISCHE PATENTSCHRIFT

(11) **EP 3 536 147 B1**
(45) Veröffentlichungstag und Bekanntmachung des Hinweises auf die Patenterteilung: **07.10.2020**
(21) Anmeldenummer: 19000102.4
(22) Anmeldetag: 27.02.2019
(51) Int. Cl.: A01K 1/00, F24F 6/14, F24F 6/04, F24F 5/00

(54) **VORRICHTUNG ZUR KLIMATISIERUNG VON STÄLLEN**
DEVICE FOR THE AIR CONDITIONING OF STABLES
DISPOSITIF DE CLIMATISATION DES ÉCURIES

(30) Priorität: 08.03.2018 DE 202018001233 U
(43) Veröffentlichungstag der Anmeldung: 11.09.2019
(73) Patentinhaber: Barnstorfer Kunststofftechnik GmbH & Co. KG, 49406 Barnstorf (DE)
(72) Erfinder: Schumacher, Egon, 49406 Barnstorf (DE)
(74) Vertreter: Möller, Friedrich

(56) Entgegenhaltungen:
- WO-A1-99/36739
- US-A1- 2007 163 280

## Beschreibung

Die Erfindung betrifft eine Vorrichtung zur Klimatisierung von Ställen, insbesondere zum Kühlen und/oder Befeuchten von Stallluft, gemäß dem Oberbegriff des Anspruchs 1.

Vorrichtungen dieser Art verfügen über padartige Verdunstungskörper, die zu einer Art Wand aufgestellt sind und von oben mit einer Flüssigkeit, insbesondere Wasser, berieselt werden. Im Folgenden wird nur noch von Wasser gesprochen, was die Verwendung anderer Flüssigkeiten aber nicht ausschließen soll. Das bevorzugt in, gegebenenfalls aber auch an dem Verdunstungskörpern herunterrieselnde Wasser wird von der Wärmeenergie in der Umgebungsluft verdunstet. Dabei wird Luft, insbesondere Stallluft, gekühlt und gleichzeitig befeuchtet.

Über den vorzugsweise längsgerichtet und aufrechtstehend hintereinander angeordneten Verdunstungskörpern ist mindestens ein mit Wasser versorgbares Sprührohr angeordnet. Dem mindestens einen Sprührohr ist ein Deflektor zugeordnet, der aus dem Sprührohr austretende feine Flüssigkeitsstrahlen so umlenkt und verteilt, dass die Verdunstungskörper von oben her gleichmäßig, insbesondere vollflächig, über ihre längsgerichtete obere Stirnwandung her mit Wasser beaufschlagt werden.

Aus der US 2007/163280 A1 ist es bekannt, den Deflektor und das mindestens eine Sprührohr an über den Verdunstungskörpern angeordneten, beabstandeten Haltern zu befestigen. Der Deflektor ist an einem Längsrandbereich durch einen lösbaren Verschluss mit den Haltern verbunden und an einem gegenüberliegenden Längsrandbereich durch ein Scharnier dauerhaft an den Haltern befestigt.

Der Erfindung liegt die Aufgabe zugrunde, eine Vorrichtung zur Klimatisierung von Ställen, insbesondere zum Kühlen und/oder Befeuchten von Stallluft, zu schaffen, die einen einfachen Zugang zu einem Raum zwischen dem jeweiligen Deflektor und dem mindestens einen Sprührohr vorzugsweise zu Reinigungszwecken zulässt.

Eine Vorrichtung zur Lösung dieser Aufgabe weist die Merkmale des Anspruchs 1 auf. Demnach ist der oder jeder Deflektor mit den Haltern durch lösbare Scharnierverbindungen an seinen gegenüberliegenden Längsrandbereichen verbindbar. Dazu ist es vorgesehen, dass der mindestens eine Deflektor lösbare Scharnierverbindungen an beiden gegenüberliegenden Längsseitenrändern aufweist, vorzugsweise identische Scharnierverbindungen. Dadurch ist der mindestens eine Deflektor relativ zu den Haltern wahlweise um eine der beiden Scharnierverbindungen verschwenkbar. Die mindestens eine lösbare Scharnierverbindung ist zum Verschwenken des jeweiligen Deflektors relativ zu den diesen tragenden Haltern ausgebildet. Dadurch braucht nur noch ein Längsrand des jeweiligen Deflektors von den ihm zugeordneten Haltern gelöst zu werden, um Zugang zu dem Raum zwischen dem jeweiligen Deflektor und dem mindestens einen Sprührohr zu erhalten. Der Raum zwischen dem mindestens einen Sprührohr und dem jeweiligen Deflektor wird zugänglich, ohne den Deflektor von den Haltern entfernen zu müssen. Der jeweilige Deflektor braucht lediglich um eine Schwenkachse verschwenkt zu werden, um das mindestens eine Sprührohr von oben zugänglich zu machen. Außerdem sorgt die mindestens einen Schwenkachse dafür, dass der jeweilige Deflektor nach dem Hochschwenken mit den Haltern verbunden bleibt. Es können so gleichzeitig das mindestens eine mit den Haltern verbundene Sprührohr und der jeweilige ebenso mit den Haltern verbundene Deflektor gereinigt werden.

Bei einer bevorzugten Ausgestaltung der Vorrichtung dienen die lösbaren Schwenkverbindungen gleichzeitig als Rast- und/oder Steckverbindungen und als Scharniere zum Auf- und Zuklappen des mindestens einen Deflektors. Dadurch haben die Scharnierverbindungen eine Doppelfunktion, indem sie zum einen zur lösbaren Verbindung jedes Längsrands des oder des jeweiligen Deflektors mit den Haltern dienen, und zum anderen wahlweise eine Scharnierverbindung lösbar ist, während die andere geschlossen bleibt, um den jeweiligen Deflektor zu verschwenken, insbesondere hochzuschwenken und anschließend wieder zurückzuschwenken. Der Deflektor kann so entweder um die eine oder andere Scharnierverbindung verschwenkt werden, je nachdem, von wo aus der Raum zwischen dem Deflektor und dem mindestens einen Sprührohr geöffnet werden soll.

Gemäß einer vorteilhaften Ausgestaltungsmöglichkeit ist es vorgesehen, zur Bildung eines beweglichen Teils jeder Scharnierverbindung an mindestens einem Längsrandbereich, vorzugsweise beiden Längsrandbereichen, des jeweiligen Deflektors ein außen größtenteils zylindrisches Längsrandprofil vorzusehen. Damit kann sowohl ein Scharnier gebildet werden als auch eine Rast- und/oder Steckverbindung. Solche Scharnierverbindungen lassen sich einfach bilden und gewährleisten eine große Flexibilität beim Öffnen und Schließen des Raums zwischen dem mindestens einen Sprührohr und dem ihm jeweils zugeordneten Deflektor.

Bevorzugt wird das Gegenstück zum beweglichen Teil jeder Scharnierverbindung, nämlich ein festes Teil derselben, gebildet am jeweiligen Halter für sowohl das mindestens eine Sprührohr und den oder jeden Deflektor. Der feste Teil jeder Scharnierverbindung wird durch Aufnahmetaschen, vorzugsweise auf gegenüberliegenden Seiten des jeweiligen Halters, gebildet. Mit den Aufnahmetaschen der Halter lassen sich die Längsrandprofile des jeweiligen Deflektors durch Zusammenstecken oder auch Rasten leicht lösbar verbinden und es ist außerdem das jeweilige Längsrandprofil am betreffenden Deflektor in den Aufnahmetaschen der Halter verdrehbar. Dadurch bilden die Aufnahmetaschen der mit Abstand aufeinanderfolgenden Halter mit dem ihnen zugeordneten zylindrischen Längsrandprofil des Deflektors ein Scharnier.

Eine bevorzugte Ausgestaltung der Vorrichtung sieht es vor, dass die Längsrandprofile des jeweiligen Deflektors derart mit den beiden Aufnahmetaschen des jeweiligen Halters korrespondieren, dass die Längsrandprofile rastend in die Aufnahmetaschen der Halter eindrückbar sind. Alternativ oder zusätzlich ist es vorgesehen, ein an mindestens einem Längsrandbereich des jeweiligen Deflektors außen vorgesehenes Längsrandprofil derart zu den Aufnahmetaschen des jeweiligen Halters korrespondierend auszubilden, dass das mindestens eine Längsrandprofil um seine Längsmittelachse in den Aufnahmetaschen der Halter verdrehbar ist.

Gemäß einer vorteilhaften Weiterbildung der Vorrichtung ist es möglich, dass der oder der jeweilige Deflektor wenigstens im hochgeschwenkten Zustand selbsttätig arretierbar ist. Dadurch behält der hochgeklappte Deflektor seine Stellung bei. Insbesondere wird dadurch verhindert, dass der Deflektor nicht weiter aufklappt und/oder ungewollt in seine Schließstellung zurückklappt, wenn mit einem Wasserstrahl oder dergleichen das mindestens eine Sprührohr und/oder der jeweilige Deflektor gereinigt werden.

Bevorzugt erfolgt die Arretierung des jeweiligen Deflektors wenigstens in einer hochgeklappten Stellung an der beim Verschwenken des Deflektors als Scharnier dienenden und beim Öffnen nicht getrennten Scharnierverbindung. Die Arretierung ist dazu bevorzugt in die Scharnierverbindung integriert. Eine solche Arretierung lässt sich leicht bilden. Sie erfordert keine zusätzlichen Bauteile.

Die Arretierung des jeweiligen Deflektors in mindestens einer hochgeklappten Stellung kann in die jeweilige Scharnierverbindung integriert sein, indem das jeweilige Längsrandprofil an dem oder jedem Deflektor mindestens einen Vorsprung aufweist. Dieser Vorsprung korrespondiert entweder mit einem Längsrand der Aufnahmetaschen der dem Deflektor zugeordneten Halter oder einer entsprechenden Vertiefung in den Aufnahmetaschen. Es kommt dann an der jeweiligen Scharnierverbindung zumindest bei hochgeklapptem Deflektor ein Vorsprung außen am Längsrandprofil mit den Längsrändern der Aufnahmetaschen oder einer korrespondierenden Vertiefung in den Aufnahmetaschen zum Eingriff. Das führt zu einem quasi formschlüssigen Blockieren der Scharnierverbindung, indem das Längsrandprofil in den Aufnahmetaschen nicht mehr verdrehbar ist, solange der Vorsprung in Vertiefungen eingreift oder an den Längsrändern anliegt. Durch elastische Verformung der Aufnahmetaschen kann zum Zurückbewegen des jeweiligen Deflektors in seine geschlossene Betriebs- bzw. Ausgangsstellung die Arretierung gelöst werden. Dabei kann es vorgesehen sein, dass in der geschlossenen Betriebsstellung des jeweiligen Deflektors der Vorsprung des zylindrischen Längsrandprofils in Vertiefungen der Aufnahmetasche des jeweiligen Halters eingreift. Das sichert den jeweiligen Deflektor zusätzlich in seiner zurückgeschwenkten, geschlossenen Betriebsstellung.

Ein bevorzugtes Ausführungsbeispiel der Vorrichtung wird nachfolgend anhand der Zeichnung näher erläutert. In dieser zeigen:
- Fig. 1: einen Querschnitt durch den oberen Teil der Vorrichtung im Bereich eines Sprührohrs und eines diesem zugeordneten Deflektors,
- Fig. 2: eine vergrößerte Einzelheit II aus der Darstellung der Fig. 1,
- Fig. 3: eine Darstellung analog zur Fig. 1 bei um einen Längsrandbereich hochgeschwenkten und arretierten Deflektor,
- Fig. 4: eine vergrößerte Einzelheit IV aus der Fig. 3, und
- Fig. 5: eine Darstellung analog zu den Fig. 1 und 3 bei um einen gegenüberliegenden Längsrandbereich hochgeschwenktem Deflektor.

Die in den Figuren dargestellte Vorrichtung zur Klimatisierung von Ställen durch Kühlen und/oder Befeuchten der Stallluft ist bevorzugt im Bereich mindestens einer aufrechten Wand des Stalls angeordnet. Dann ersetzt die Vorrichtung dort, wo sie angeordnet ist, eine Wand des Stalls.

Die Vorrichtung verfügt über mehrere hintereinander angeordnete, vorzugsweise gleiche Verdunstungskörper 10. Die Verdunstungskörper 10 weisen flache quaderförmige Umrisse auf. Sie sind aufrechtstehend und längsorientiert hintereinander vorzugsweise in Längsrichtung des Stalls angeordnet. Die Verdunstungskörper 10 verfügen über eine Vielzahl gewellter Platten oder Folien aus Papier oder Kunststoff. Eine Vielzahl solcher Folien oder Platten ist hintereinanderliegend angeordnet, wobei benachbarte Platten miteinander verbunden sind. Durch die Wellung der Platten oder Folien entsteht im Inneren der Verdunstungskörper 10 eine Vielzahl von vorzugsweise abwechselnd gegensinnig gerichteten und mindestens teilweise schräg verlaufende Kanäle, die von der zu klimatisierenden Luft in Richtung zum Inneren des Stalls durchströmt werden. Außerdem strömt Wasser, zum Beispiel kleine Wassertropfen, nach Art eines Wassernebels von oben nach unten durch den Verdunstungskörper 10. Die Verdunstungskörper 10 ruhen auf einer wasserdurchlässigen gitterartigen Abdeckung, die oben auf einer Wasserauffangrinne angeordnet ist. Die in den Figuren nicht gezeigte Abdeckung und die Wasserauffangrinne erstrecken sich längsgerichtet unter den aufeinanderfolgenden Verdunstungskörpern 10.

Über den Verdunstungskörpern 10 ist im gezeigten Ausführungsbeispiel ein einziges Sprührohr 13 angeordnet. Es können aber auch mehrere, vorzugsweise zwei nebeneinanderliegende, Sprührohre 13 über den Verdunstungskörpern 10 angeordnet sein. In den Figuren ist ein zylindrisches Sprührohr 13 dargestellt. Es sind aber auch Sprührohre 13 mit anderen Querschnitten, beispielsweise halbrunden, dreieckigen oder rechteckigen Querschnitten denkbar. Dem Sprührohr 13 sind ein einziger, durchgehender Deflektor 14 oder mehrere aufeinanderfolgende, zusammenhängende Deflektoren 14 zugeordnet. Der mindestens eine Deflektor 14 ist über dem Sprührohr 13 angeordnet, und zwar mit Abstand zum Sprührohr 13. Dadurch wird ein Raum 15 zwischen dem Sprührohr 13 und dem mindestens einen Deflektor 14 gebildet.

Der wenigstens eine Deflektor 14 und das mindestens eine Sprührohr 13 sind an mehreren in Längsrichtung der Reihe aufeinanderfolgender Verdunstungskörper 10 mit in vorzugsweise gleichmäßigen Abständen aufeinanderfolgenden schmalen bzw. kurzen Haltern 16 befestigt. Mehrere mit Abstand in Längsrichtung des Sprührohrs 13 und Deflektors 14 aufeinanderfolgende Halter 16 tragen so gemeinsam das Sprührohr 13 und den mindestens einen darüber angeordneten Deflektor 14.

Zwischen den Unterseiten der Halter 16 und einer oberen, vorzugsweise horizontalen, längsgerichteten Stirnwandung 17 der aufeinanderfolgenden Verdunstungskörper 10 sind zwei mit Abstand parallel zueinander verlaufende Randstreifen 18 vorgesehen. Die gleich ausgebildeten und entgegengesetzt, spiegelverkehrt orientierten Randstreifen 18 verlaufen über parallele obere Eckbereiche 19 an gegenüberliegenden Rändern der oberen Stirnwandung 17 der hintereinanderliegend angeordneten Verdunstungskörper 10 hinweg und sind vorzugsweise unter den Eckbereichen 19 von außen an gegenüberliegenden Längsseitenflächen der Verdunstungskörper 10 angeklemmt. Oberseitig sind die Randstreifen 18 durch mit den in Längsrichtung beabstandeten Halter 16 klemmend und/oder rastend verbunden.

In der nachfolgenden Beschreibung wird der Einfachheit halber stets von einem Verdunstungskörper 10, einem Sprührohr 13 und einem Deflektor 14 gesprochen, ohne dass darauf die Erfindung beschränkt sein soll. In der Regel sind mehrere Verdunstungskörper 10 und Deflektoren 14 in Längsrichtung der Vorrichtung aufeinanderfolgend angeordnet. Ebenso können mehrere Sprührohre 13 hintereinander und/oder nebeneinander vorgesehen sein.

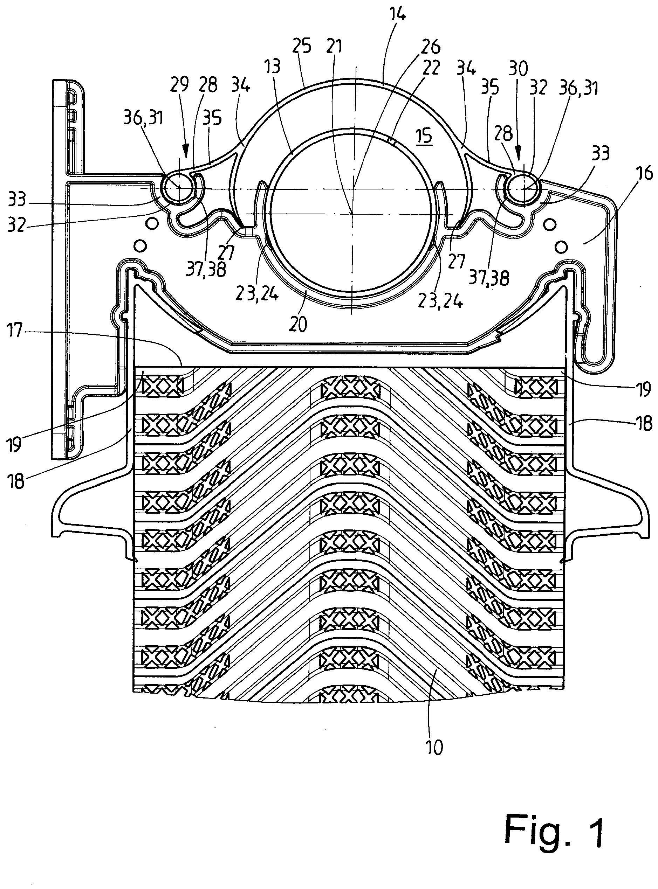

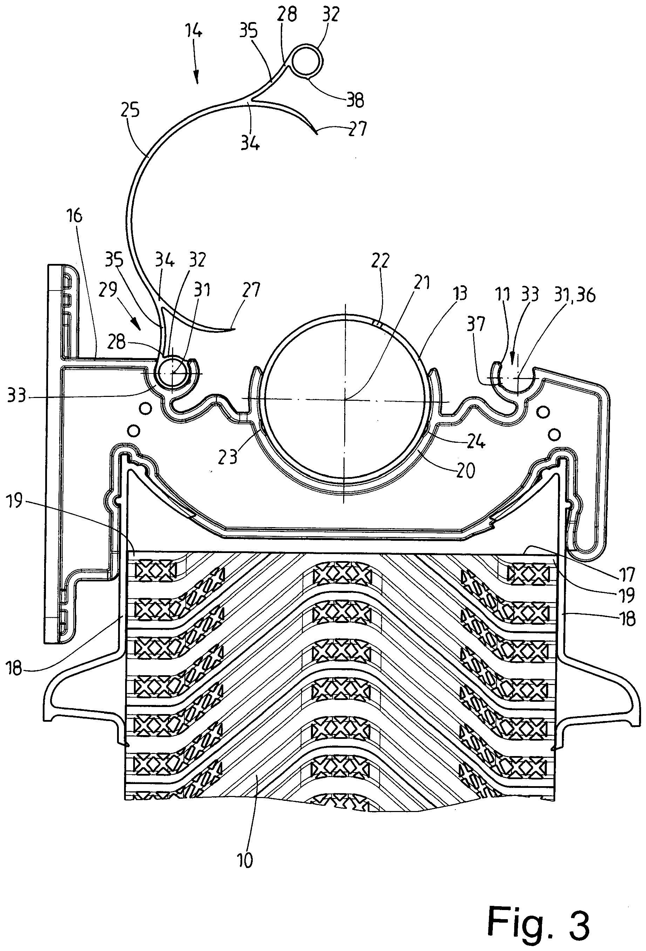

Jeder der gleich ausgebildeten Halter 16 verfügt oberseitig in der Mitte über eine Rastmulde 20. Die innere, teilzylindrische Wandung der Rastmulde 20 umgibt mehr als die untere Hälfte der äußeren Mantelfläche des zylindrischen Sprührohrs 30. Im gezeigten Ausführungsbeispiel umgibt die Rastmulde 20 die äußere Mantelfläche des Sprührohrs 13 etwa um 200° bis 250°. Dabei kann das Sprührohr 13 rastend mit jedem Halter 16 verbunden werden. Die Rastmulde 20 umgibt dabei konzentrisch eine Längsmittelachse 21 des Sprührohrs 13. Dabei bleibt ein Oberteil des Sprührohrs 13, um das sich die Rastmulde 20 nicht erstreckt, frei. In diesem freien oberen Teil weist das Sprührohr 14 eine Vielzahl von vorzugsweise gemäß einem gleichmäßigen Raster verteilte Öffnungen 22 oder Düsen auf. In den Fig. 1 und 3 ist aus Gründen der Vereinfachung stets nur eine der vielen Öffnungen 22 bzw. Düsen mit einer radial gerichteten Orientierung in der Wandung des oberen, von der Rastmulde 20 freigelassen Bereichs des Sprührohrs 13 dargestellt.

Die ausgehend von der Längsmittelachse 21 des Sprührohrs 13 radial zur konkav gewölbten Innenseite des Deflektors 14 gerichteten Öffnungen 22 bzw. Düsen spritzen oder sprühen Wasser von unten gegen die konkave Innenseite bzw. Unterseite des Deflektors 14. Dieses Wasser läuft an der Innenseite des Deflektors 14 nach unten, und zwar an beiden Seiten. Ein Teil des Wassers tropft an den zwischen benachbarten Haltern 16 liegenden Bereichen gegenüberliegender Längskanten 27 des Deflektors 14 nach unten ab, wo es an gegenüberliegenden Stellen von oben auf die oberen Stirnwandungen 17 der Verdunstungskörper 10 trifft. Ein anderer Teil des an der konkav gewölbten Innenseite des Deflektors 14 auf beiden Seiten nach unten abfließenden Wassers gelangt zwischen den Haltern 16 an einen unteren Teil des Sprührohrs 13, an dem das Wasser nach unten abläuft und etwa in der Mitte unter dem Sprührohr 13 abtropft und dann etwa mittig auf die obere horizontale Stirnwandung 17 des jeweiligen Verdunstungskörpers 10 trifft. In der vorstehend beschriebenen Weise erfolgt eine Wasserzufuhr zur oberen Stirnwandung 17 der Verdunstungskörper 10 an verschiedenen Stellen, wodurch eine gleichmäßig verteilte Einleitung des vom mindestens einen Sprührohr 13 kommenden Wassers über die obere Stirnwandung 17 in die Verdunstungskörper 10 zustande kommt. Das führt zu einer homogenen Verteilung des die Verdunstungskörper 10 von oben nach unten durchströmenden Wassers über die ganzen Verdunstungskörper 10, insbesondere ihre Querschnitte.

Bei der hier gezeigten Vorrichtung verfügt die Rastmulde 20 jedes Halters 16 über zwei gegenüberliegende, in Längsrichtung durchgehende nutartige Vertiefungen 23. Dazu korrespondierende flache Wülste 24 sind auf der äußeren zylindrischen Mantelfläche des Sprührohrs 13 vorgesehen. Die Wülste 24 verlaufen bevorzugt durchgehend in Längsrichtung des Sprührohrs 13. Infolge der in die Vertiefungen 23 der Rastmulde 20 eingreifenden Wülste 24 des Sprührohrs 13 ist das Sprührohr 13 um ihre Längsmittelachse 21 unverdrehbar mit dem jeweiligen Halter 16 verbunden.

Der mit Abstand über dem Sprührohr 13 angeordnete Deflektor 14 verläuft in Längsrichtung des Sprührohrs 13. Der Deflektor 14 verfügt über einen länglichen Hauptkörper 25 mit einem teilkreisförmigen Querschnitt. Dadurch überdeckt der mit Abstand über dem Sprührohr 13 angeordnete Deflektor 14 mit seinem mittigen Hauptkörper 25 den oberen Teil des Sprührohrs 13 und die von den Rastmulden 20 der Halter 16 freigelassenen oberen Teilbereiche des Sprührohrs 13. Eine Längsmittelachse 26 des im Querschnitt zweidrittel- bis halbkreisförmigen Hauptkörpers 25 des Deflektors 14 liegt etwas oberhalb der Längsmittelachse 21 des Sprührohrs 13. Dadurch verringert sich die Breite eines Raums 15 zwischen dem Hauptkörper 25 des Deflektors 14 und dem Sprührohr 13 ausgehend von einer vertikalen Längsmittelebene durch die übereinanderliegenden Längsmittelachsen 21 und 26 kontinuierlich zu gegenüberliegenden Seiten des Raums 15. Der Teilkreisbereich des Hauptkörpers 25 ist derart gewählt, dass seine auf gleicher Höhe liegenden, parallel zueinander verlaufenden Längskanten 27 sich auf gegenüberliegenden Seiten neben der Rastmulde 20 des jeweiligen Halters 16 abstützen. Dadurch wird der Abstand des Hauptkörpers 25 des Deflektors 14 zum Sprührohr 13 und damit der Querschnitt des Raums 15 zwischen dem Sprührohr 13 und dem Deflektor 14 festgelegt.

Im gezeigten Ausführungsbeispiel verjüngt sich die Wandung des Hauptkörpers 25 des Deflektors 14 kontinuierlich zu den Längskanten 27 hin, so dass von den Längskanten 27 ausgehende Endbereiche des Hauptkörpers 25 flexibel und elastisch verformbar sind.

Der gesamte Deflektor 14 ist scharnierartig relativ zu den Haltern 16 verschwenkbar. Im gezeigten Ausführungsbeispiel ist der Deflektor 14 um zwei auf seine gegenüberliegenden Längsrandbereiche 28 verteilte Scharnierverbindungen 29, 30 verschwenkbar. Die Scharnierverbindungen 29, 30 sind hier gleich, jedoch spiegelbildlich orientiert, ausgebildet. Beide Scharnierverbindungen 29, 30 verlaufen parallel zueinander auf gegenüberliegenden Seiten der Längsmittelachse 26 des Deflektors 14. Die Abstände der Scharnierverbindungen 29, 30 zur Längsmittelachse 26 sind beim hier gezeigten Deflektor 14 gleich. Beide Scharnierverbindungen 29, 30 sind lösbar. Vorzugsweise handelt es sich bei den Scharnierverbindungen 29, 30 um lösbare Rastverbindungen.

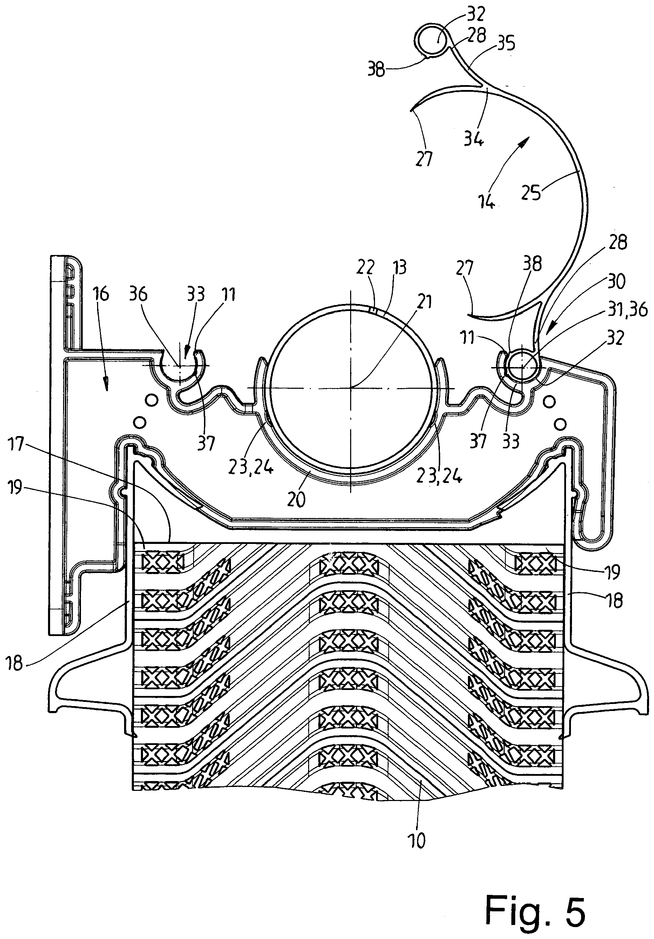

Bei der hier gezeigten Vorrichtung kann wahlweise eine der Rastverbindungen 29, 30 gelöst werden, so dass der Deflektor 14 um die andere bzw. gegenüberliegende ungeöffnete Scharnierverbindung 29 bzw. 30 verschwenkt werden kann. Eine Schwenkachse 31 jeder Scharnierverbindung 29, 30 verläuft parallel zur Längsmittelachse 26 des Deflektors 14 und zur Längsmittelachse 21 des Sprührohrs 13. Dadurch wird beim Verschwenken um die gewünschte Schwenkachse 31, also wahlweise die Schwenkachse 31 der Scharnierverbindung 29 oder die Schwenkachse 31 der Scharnierverbindung 30, der Deflektor 14 so verschwenkt, und zwar so wie es in der Fig. 3 einerseits und der Fig. 5 andererseits dargestellt ist. Dabei wird der Raum 15 zwischen dem Sprührohr 13 und dem Deflektor 14 geöffnet, beispielsweise zum Reinigen des Sprührohrs 13 und des Deflektors 14.

Jede Scharnierverbindung 29, 30 wird gleichermaßen von einem dem Deflektor 14 zugeordneten zylindrischen Längsrandprofil 32 an einem Längsrandbereich 28 des Deflektors 14 und einer dazu korrespondierenden Aufnahmetasche 33 jedes Halters 16 gebildet. Die Aufnahmetaschen 33 sind den Haltern 16 auf gegenüberliegenden Seiten ihrer Rastmulden 20 zugeordnet. Infolge der gleich ausgebildeten Scharnierverbindungen 29 und 30 werden für das zylindrische Längsrandprofil 32 und die Aufnahmetasche 33 beider Scharnierverbindungen 29 und 30 gleiche Bezugsziffern verwendet. Die Aufnahmetaschen 33 umgeben die Unterseite des zylindrischen Längsrandprofils 32 in einem Bereich von etwas mehr als 180°, vorzugsweise 200° bis 250°. Dadurch kann das jeweiligen zylindrische Längsrandprofil 32 rastend in die dazugehörende Aufnahmetasche 33 gedrückt und unter elastischer Aufweitung der Aufnahmetasche 33 aus dieser auch wieder entfernt werden, um die gewünschte Scharnierverbindung 29 oder 30 zum Aufklappen des Deflektors 14 zu lösen.

An gegenüberliegenden Seiten des Hauptkörpers 25 des Deflektors 14 befinden sich Abzweigungen 34 für jeweils einen seitlich abstehenden Flügel 35 des Deflektors 14. Jede Abzweigung 34 ist gleichermaßen etwa 60° von der vertikalen Längsmittelebene des Deflektors 14 entfernt. An den außenliegenden Enden der Flügel 35 sind die zylindrischen Längsrandprofile 32 angeordnet, und zwar so, dass sie sich unter den Enden der Flügel 35 befinden. Dadurch liegen mit den Schwenkachsen 31 zusammenfallende bzw. diese bildende Längsmittelachsen 36 beider zylindrischer Längsrandprofile 32 auf einer gemeinsamen horizontalen Längsmittelebene durch die Längsmittelachse 26 des Hauptkörpers 25 des Deflektors 14. So ist es möglich, die zylindrischen Längsrandprofile 32 in die Aufnahmetaschen 33 einzurasten.

In jeder der beiden Aufnahmetaschen 33 eines jeden Halters 16 befindet sich ein nutartige Vertiefung 37. Die jeweilige Vertiefung 37 verläuft durchgehend parallel zur jeweiligen Längsmittelachse 36 des in die Aufnahmetasche 33 eingreifenden zylindrischen Längsrandprofils 32. Eine zur Vertiefung 37 korrespondierende Wulst 38 ist außen an jedem zylindrischen Längsrandprofil 32 angeordnet. Die jeweilige längliche Wulst 38 verläuft durchgehend in Längsrichtung jedes zylindrischen Längsrandprofils 32, also parallel zur Längsmittelachse 36 des jeweiligen zylindrischen Längsrandprofils 32.

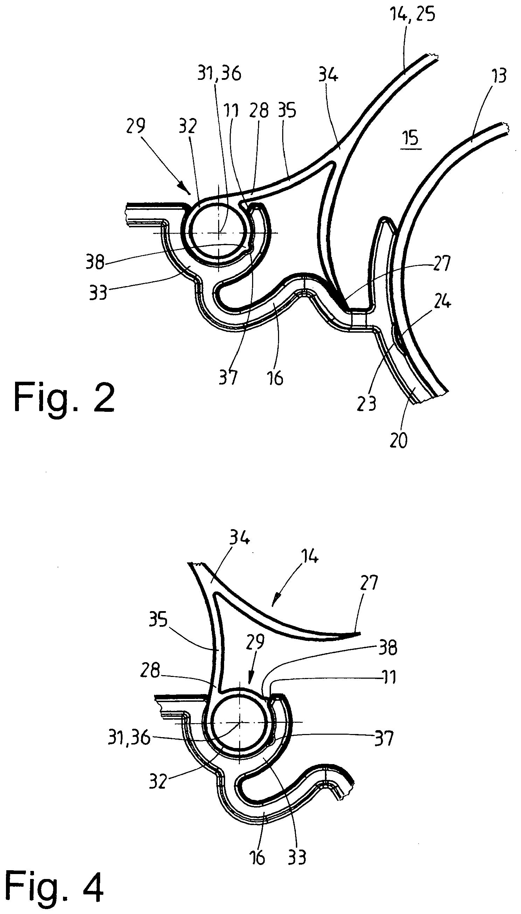

Die Anordnung der Wülste 38 an den zylindrischen Längsrandprofilen 32 und der Vertiefungen 37 der Aufnahmetaschen ist so getroffen, dass in der Betriebsstellung des Deflektors 14, wenn er den Raum 15 über dem Sprührohr 13 verschließt, die Wülste 38 beider zylindrischer Längsrandprofile 32 in die Vertiefungen 37 in jeder Aufnahmetasche 33 eingreifen (Fig. 1). Wenn hingegen der Deflektor 14 hochgeklappt ist (Fig. 3 bzw. 5), liegt die Wulst 38 des zylindrischen Längsrandprofils 32 in der geschlossen bleibenden Scharnierverbindung 29 bzw. 30 außen vor einer Längskante 11 der betreffenden Aufnahmetasche 33 der geschlossen gebliebenen Scharnierverbindung 29 oder 30 an (Fig. 4). Dadurch ist an der betreffenden geschlossen bleibenden Scharnierverbindung 29 bzw. 30 der Deflektor 14 in seiner geöffneten Stellung formschlüssig arretiert durch ein Abstützen der Wulst 38 des Deflektors 14 an der Längskante 11 der vom zylindrischen Längsrandprofil 32 besetzten Aufnahmetasche 33 der dem Deflektor 14 zugeordneten Halter 16. Der Deflektor 14 ist so gegen ungewolltes weiteres Aufschwenken oder Zurückschwenken in seine den Raum 15 verschließende Betriebsstellung gesichert.

Bevorzugt sind zumindest das Sprührohr 13, der Deflektor 14, die Halter 16 und die Randstreifen 18 der Vorrichtung aus Kunststoff, insbesondere thermoplastischem Kunststoff, gebildet und abgesehen von den Haltern 16 durch Extrusion hergestellt. Die Halter 16 sind bevorzugt im Spritzgießverfahren hergestellt. Des Weiteren sind der Hauptkörper 25, die Flügel 35 und die zylindrischen Längsrandprofile 32 des Deflektors 14 einstückig verbunden, so dass der gesamte Deflektor 14 in einem Stück vorzugsweise durch Extrusion herstellbar ist.

**Bezugszeichenliste:**

| | | | |
|---|---|---|---|
| 10 | Verdunstungskörper | 37 | Vertiefung |
| 11 | Längskante | 38 | Wulst |
| 13 | Sprührohr | | |
| 14 | Deflektor | | |
| 15 | Raum | | |
| 16 | Halter | | |
| 17 | Stirnwandung | | |
| 18 | Randstreifen | | |
| 19 | Eckbereich | | |
| 20 | Rastmulde | | |
| 21 | Längsmittelachse | | |
| 22 | Öffnung | | |
| 23 | Vertiefung | | |
| 24 | Wulst | | |
| 25 | Hauptkörper | | |
| 26 | Längsmittelachse | | |
| 27 | Längskante | | |
| 28 | Längsrandbereich | | |
| 29 | Scharnierverbindung | | |
| 30 | Scharnierverbindung | | |
| 31 | Schwenkachse | | |
| 32 | zylindrisches Längsrandprofil | | |
| 33 | Aufnahmetasche | | |
| 34 | Abzweigung | | |
| 35 | Flügel | | |
| 36 | Längsmittelachse | | |

## Patentansprüche

1. Vorrichtung zur Klimatisierung von Ställen, insbesondere zum Kühlen und/oder Befeuchten von Stallluft mit Verdunstungskörpern (10), mindestens einem darüber angeordneten Sprührohr (13), das mit Flüssigkeit versorgbar ist, wenigstens einem Deflektor (14) über dem mindestens einem Sprührohr (13) und Halter (16) für das mindestens eine Sprührohr (13) sowie den wenigstens einen Deflektor (14) über den Verdunstungskörpern (10), wobei der oder der jeweilige Deflektor (14) an den Haltern (16) mit wenigstens einem seiner gegenüberliegenden Längsrandbereiche (28) durch wenigstens eine Scharnierverbindung (29, 30) befestigbar ist, wobei die wenigstens eine Scharnierverbindung (29, 30) zum Verschwenken des oder des jeweiligen Deflektors (14) relativ zu den diesen tragenden Haltern (16) ausgebildet ist, **dadurch gekennzeichnet, dass** der jeweilige Deflektor (14) relativ zu den Haltern (16) wahlweise um eine von zwei lösbaren Scharnierverbindungen (29, 30) an seinen gegenüberliegenden Längsrandbereichen (28) verschwenkbar ist.

2. Vorrichtung nach Anspruch 1, **dadurch gekennzeichnet, dass** die Scharnierverbindungen (29, 30) gleichartig, insbesondere gleich, ausgebildet sind und/oder die Scharnierverbindungen (29, 30) gleichzeitig als Rast- und/oder Steckverbindungen sowie Schwenkverbindungen ausgebildet sind.

3. Vorrichtung nachAnspruch 1 oder 2, **dadurch gekennzeichnet, dass** zur Bildung eines beweglichen Teils jeder Scharnierverbindung (29, 30) mindestens einem Längsrandbereich (28) des jeweiligen Deflektors (14) ein wenigstens größtenteils zylindrisches Längsrandprofil (32) zugeordnet ist.

4. Vorrichtung nach einem der vorhergehenden Ansprüche, **dadurch kennzeichnet, dass** ein fester Teil der mindestens einen Scharnierverbindung (29, 30) vom jeweiligen Halter (16) gebildet ist, vorzugsweise der jeweilige Halter (16) an gegenüberliegenden Seiten des mindestens einen Sprührohrs (13) sich befindende Aufnahmetaschen (33) für sich im Bereich des jeweiligen Halters (16) befindende Abschnitte des mindestens einen zylindrischen Längsrandprofils (32) des jeweiligen Deflektors (14) aufweist.

5. Vorrichtung nach einem der vorhergehenden Ansprüche, **dadurch gekennzeichnet, dass** das mindestens eine zylindrische Längsrandprofil (32) des oder des jeweiligen Deflektors (14) derart korrespondierend zur mindestens einen Aufnahmetasche (33) des jeweiligen Halters (16) ausgebildet ist, dass das zylindrische Längsrandprofil (32) um seine Längsmittelachse (36) verschwenkbar in den ihm zugeordneten, korrespondierenden Aufnahmetaschen (33) gelagert ist.

6. Vorrichtung nach einem der vorhergehenden Ansprüche, **dadurch gekennzeichnet, dass** das mindestens eine zylindrische Längsrandprofil (32) des jeweiligen Deflektors (14) derart zu der mindestens einen Aufnahmetasche (33) des jeweiligen Halters (16) korrespondierend ausgebildet ist, dass das mindestens eine zylindrische Längsrandprofil (32) rastend in die diesem zugeordnete Aufnahmetasche (33) des jeweiligen Halters (16) eindrückbar und wieder von der Aufnahmetasche (33) lösbar ist.

7. Vorrichtung nach einem der vorhergehenden Ansprüche, **dadurch gekennzeichnet, dass** der jeweilige Deflektor (14) wenigstens im hochgeschwenktem Zustand arretierbar ist, vorzugsweise die Arretierung im Bereich einer zum Hochschwenken des jeweiligen Deflektors (14) dienenden Scharnierverbindung (29, 30) erfolgt.

8. Vorrichtung nach Anspruch 7, **dadurch gekennzeichnet, dass** die Arretierung des jeweiligen Deflektors (14) wenigstens im hochgeklapptem Zustand an oder in der beim Verschwenken des jeweiligen Deflektors (14) als Scharnier dienenden Scharnierverbindung (29, 30) erfolgt.

9. Vorrichtung nach einem der vorhergehenden Ansprüche, **dadurch gekennzeichnet, dass** die oder jede Scharnierverbindung (29, 30) mindestens eine Wulst (38) am zylindrischen Längsrandprofil (32) und mindestens eine mit der Wulst (38) korrespondierende Vertiefung (37) in der oder jeder Aufnahmetasche (33) der Halter (16) aufweist.

## Claims

1. Device for air-conditioning stalls, in particular for cooling and/or humidifying stall air with evaporation members (10), at least one spray pipe (13) which is arranged thereabove and which can be supplied with fluid, at least one deflector (14) above the at least one spray pipe (13) and retention members (16) for the at least one spray pipe (13) as well as for the at least one deflector (14) above the evaporation members (10), wherein the or the respective deflector (14) can be secured to the retention members (16) with at least one of the opposing longitudinal edge regions (28) thereof by means of at least one hinge connection (29, 30), wherein the at least one hinge connection (29, 30) is constructed to pivot the or the respective deflector (14) relative to the retention members (16) which carry it, **characterised in that** the respective deflector (14) can be pivoted relative to the retention members (16) optionally about one of two releasable hinge connections (29, 30) at the opposing longitudinal edge regions (28) thereof.

2. Device according to claim 1, **characterised in that** the hinge connections (29, 30) are constructed similarly, in particular identically, and/or the hinge connections (29, 30) are constructed at the same time as locking and/or plug type connections and pivot connections.

3. Device according to claim 1 or 2, **characterised in that** in order to form a movable portion of each hinge connection (29. 30) an at least mainly cylindrical longitudinal edge profile (32) is associated with at least one longitudinal edge region (28) of the respective deflector (14).

4. Device according to one of the previous claims, **characterised in that** a fixed portion of the at least one hinge connection (29, 30) is formed by the respective retention member (16), preferably the respective retention member (16) has receiving pockets (33) which are located at opposing sides of the at least one spray pipe (13) for portions of the at least one cylindrical longitudinal edge profile (32) of the respective deflector (14), which portions are located in the region of the respective retention member (16).

5. Device according to one of the previous claims, **characterised in that** the at least one cylindrical longitudinal edge profile (32) of the or the respective deflector (14) is constructed to correspond to the at least one receiving pocket (33) of the respective retention member (16) in such a manner that the cylindrical longitudinal edge profile (32) is supported so as to be able to be pivoted about the longitudinal centre axis (36) thereof in the associated corresponding receiving pockets (33).

6. Device according to one of the previous claims, **characterised in that** the at least one cylindrical longitudinal edge profile (32) of the respective deflector (14) is constructed to correspond to the at least one receiving pocket (33) of the respective retention member (16) in such a manner that the at least one cylindrical longitudinal edge profile (32) can be pressed into the associated receiving pocket (33) of the respective retention member (16) in a locking manner and released from the receiving pocket (33) again.

7. Device according to one of the previous claims, **characterised in that** the respective deflector (14) can be locked at least in the state pivoted upwards, preferably with the locking occurring in the region of a hinge connection (29, 30) that is used to pivot the respective deflector (14) upwards.

8. Device according to claim 7, **characterised in that** the locking of the respective deflector (14) at least in the state folded upwards is carried out at or in the hinge connection (29, 30) which acts as a hinge when the respective deflector (14) is pivoted.

9. Device according to one of the previous claims, **characterised in that** the or each hinge connection (29, 30) has at least one bead (38) on the cylindrical longitudinal edge profile (32) and at least one recess (37) which corresponds to the bead (38) in the or each receiving pocket (33) of the retention members (16).

## Revendications

1. Dispositif de climatisation de lieux de stabulation, destiné en particulier à refroidir et/ou humidifier l'air du lieu de stabulation, comprenant des éléments d'évaporation (10), au moins un tube de pulvérisation (13) qui est disposé au-dessus et qui peut être alimenté avec un liquide, au moins un déflecteur (14) placé au-dessus de l'au moins un tube de pulvérisation (13) et des supports (16) destinés à l'au moins un tube de pulvérisation (13) et à l'au moins un déflecteur (14) au-dessus des éléments d'évaporation (10), le déflecteur ou le déflecteur respectif (14) pouvant être fixé aux supports (16) avec au moins une de ses régions de bord longitudinal opposées (28) par le biais d'au moins une liaison à charnière (29, 30), l'au moins une liaison à charnière (29, 30) étant conçue pour faire pivoter le déflecteur ou le déflecteur respectif (14) par rapport aux supports (16) portant celui-ci, **caractérisé en ce que** le déflecteur respectif (14) peut pivoter par rapport aux supports (16) au choix autour de l'une des deux liaisons à charnière amovibles (29, 30) au niveau de ses régions de bord longitudinal opposées (28).

2. Dispositif selon la revendication 1, **caractérisé en ce que** les liaisons à charnière (29, 30) sont du même type, en particulier identiques, et/ou les liaisons à charnière (29, 30) sont conçues simultanément comme des liaisons à enfichage et/ou à encliquetage et des liaisons pivotantes.

3. Dispositif selon la revendication 1 ou 2, **caractérisé en ce que,** pour former une partie mobile de chaque liaison à charnière (29, 30), au moins une région de bord longitudinal (28) du déflecteur respectif (14) est associée à un profil de bord longitudinal (32) au moins en grande partie cylindrique.

4. Dispositif selon l'une des revendications précédentes, **caractérisé en ce qu'**une partie fixe de l'au moins une liaison à charnière (29, 30) est formée par le support respectif (16), de préférence le support respectif (16) comporte des poches de réception (33) situées sur des côtés opposés de l'au moins un tube de pulvérisation (13) et destinées à des portions, situées dans la région du support respectif (16), de l'au moins un profil de bord longitudinal cylindrique (32) du déflecteur respectif (14).

5. Dispositif selon l'une des revendications précédentes, **caractérisé en ce que** l'au moins un profil de bord longitudinal cylindrique (32) du déflecteur ou du déflecteur respectif (14) est conçu en correspondance de l'au moins une poche de réception (33) du support respectif (16), **en ce que** le profil de bord longitudinal cylindrique (32) est monté dans les poches de réception correspondantes (33) qui lui sont associées de manière à pouvoir pivoter sur son axe central longitudinal (36).

6. Dispositif selon l'une des revendications précédentes, **caractérisé en ce que** l'au moins un profil de bord longitudinal cylindrique (32) du déflecteur respectif (14) est conçu de manière à correspondre à l'au moins une poche de réception (33) du support respectif (16) de sorte que l'au moins un profil de bord longitudinal cylindrique (32) peut être enfoncé dans la poche de réception (33) du support respectif (16) qui lui est associé, et détaché à nouveau de la poche de réception (33), par encliquetage.

7. Dispositif selon l'une des revendications précédentes, **caractérisé en ce que** le déflecteur respectif (14) peut être bloqué au moins à l'état pivoté vers le haut, de préférence le blocage étant effectué au niveau d'une liaison à charnière (29, 30) servant à faire pivoter le déflecteur respectif (14) vers le haut.

8. Dispositif selon la revendication 7, **caractérisé en ce que** le blocage du déflecteur respectif (14) est effectué au moins à l'état rabattu vers le haut sur ou dans la liaison à charnière (29, 30) servant de charnière lors du pivotement du déflecteur respectif (14).

9. Dispositif selon l'une des revendications précédentes, **caractérisé en ce que** la ou chaque liaison à charnière (29, 30) comporte au moins un bourrelet (38) au niveau du profil de bord longitudinal cylindrique (32) et au moins un évidement (37) correspondant au bourrelet (38) dans la ou chaque poche de réception (33) des supports (16).
